# EUROPÄISCHE PATENTSCHRIFT

(11) **EP 1 599 356 B1**
(45) Veröffentlichungstag und Bekanntmachung des Hinweises auf die Patenterteilung: **10.10.2007**
(21) Anmeldenummer: 03785743.0
(22) Anmeldetag: 05.12.2003
(51) Int. Cl.: B60N 2/01

(54) **MITEINANDER VERSCHWEISSBARE BAUTEILE FÜR STELLVORRICHTUNGEN VON KRAFTFAHRZEUGSITZEN**
PARTS, WHICH ARE PROVIDED FOR THE ADJUSTING DEVICES OF MOTOR VEHICLE SEATS AND WHICH CAN BE WELDED TO ONE ANOTHER
COMPOSANTS CONNUS POUR DES DISPOSITIFS DE REGLAGE DE SIEGES DE VEHICULE AUTOMOBILE, POUVANT ETRE SOUDES LES UNS AUX AUTRES

(30) Priorität: 05.03.2003 DE 10309415
(43) Veröffentlichungstag der Anmeldung: 30.11.2005
(73) Patentinhaber: Faurecia Autositze GmbH & Co. KG, 31655 Stadthagen (DE)
(72) Erfinder: LANGE, Dieter, 32469 Petershagen (DE)
(74) Vertreter: Elbertzhagen, Otto
(86) Internationale Anmeldenummer: PCT/EP2003/013740
(87) Internationale Veröffentlichungsnummer: WO 2004/078512

(56) Entgegenhaltungen:
- EP-A- 0 556 712
- DE-A- 4 140 720
- DE-A- 4 339 508

## Beschreibung

### TECHNISCHES GEBIET

Die Erfindung betrifft miteinander verschweißbare Bauteile nach dem Oberbegriff des Patentanspruchs 1.

### STAND DER TECHNIK

Bauteile dieser Art, die mit Hilfe eines Kondensator-Impuls-Schweißvorgangs miteinander verschweißt werden, sind aus der DE 43 39 508 C2, die alle Merkmale aus dem Oberbegriff des Anspruchs 1 zeigt, bekannt. Bei diesen bekannten Bauteilen wird eine als Facette bezeichnete Ausprägung während des Kondensator-Impuls-Schweißvorgangs so weit in die korrespondierende Ausnehmung des zweiten Bauteils eingedrückt, daß die einander zugewandten Oberflächen nach dem Verschweißen eng aneinanderliegen. Damit das beim Schweißvorgang verdrängte Volumen aufgenommen werden kann, ist im Bereich der als Facette bezeichneten Ausprägung an wenigstens einem der Bauteile eine Auffangtasche vorgesehen.

Das Verschweißen der beiden Bauteile in der bekannten Weise ist nachteilig, weil die zum engen Aneinanderliegen vorgesehenen Flächen der beiden Bauteile toleranzbedingt krumm sind. Dies erweist sich als nachteilig insb. bei empfindlichen Stellvorrichtungen, wie beispielsweise Neigungsverstellvorrichtungen für die Rückenlehnen von Kraftfahrzeugsitzen, die miteinander kämmende Verzahnungen aufweisen, welche eine möglichst vollständige Parallelität der Schwenkachsen beider miteinander kämmender Bauteile erfordern.

Außerdem ist das bei den bekannten Bauteilen angewandte spezielle Widerstandsschweißverfahren, nämlich ein Kondensator-Impuls-Schweißvorgang, vergleichsweise aufwendig.

### DIE ERFINDUNG

Ausgehend von diesem Stand der Technik liegt der Erfindung die Aufgabe zugrunde, miteinander verschweißbare Bauteile zu schaffen, welche eine exakte Ausrichtung nach dem Schweißvorgang und einen Verzicht auf Auffangtaschen für das beim Schweißvorgang verdrängte Volumen ermöglichen.

Die Lösung dieser Aufgabe erfolgte mit den Merkmalen des Patentanspruchs 1.

Bevorzugte Ausführungsbeispiele der Erfindung ergeben sich aus den Unteransprüchen.

### KURZBESCHREIBUNG DER ZEICHNUNGSABBILDUNG

Nachstehend wird eine bevorzugte Ausführungsform der Erfindung anhand der Zeichnung im einzelnen beschrieben. Es zeigen:

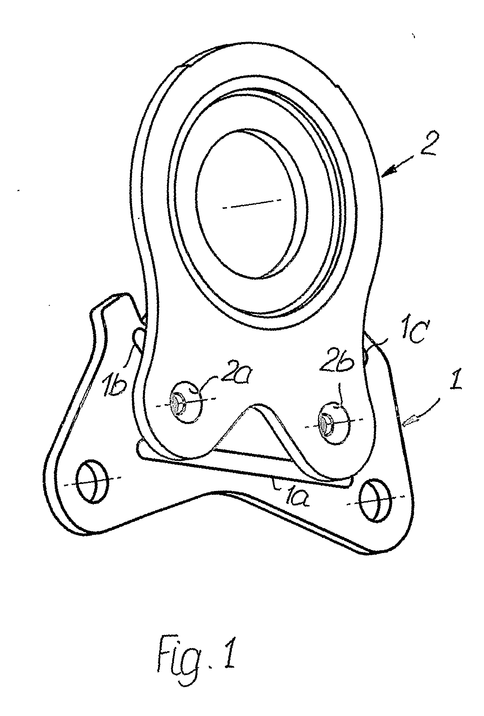

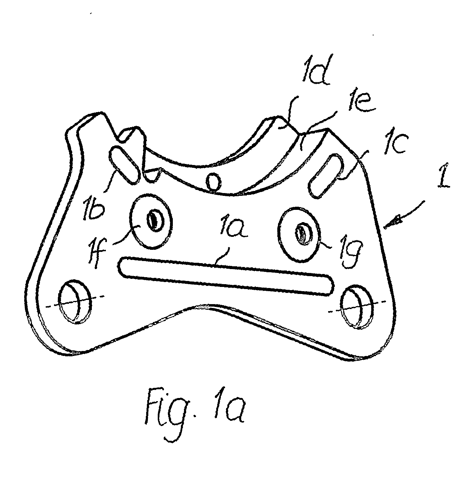

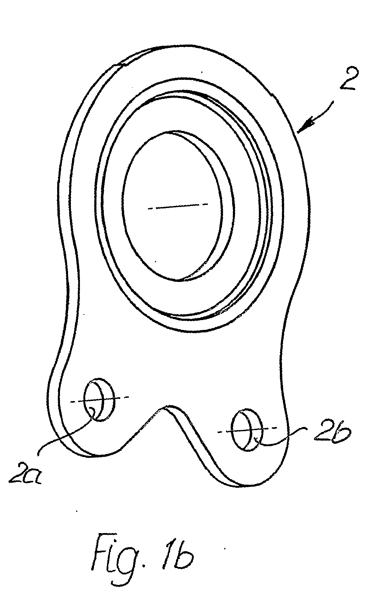

- Figur 1 -: eine perspektivische Ansicht zweier miteinander verschweißter Bauteile,
- Figur 1a -: eine perspektivische Ansicht des einen Bauteils,
- Figur 1b -: eine perspektivische Ansicht des anderen Bauteils,

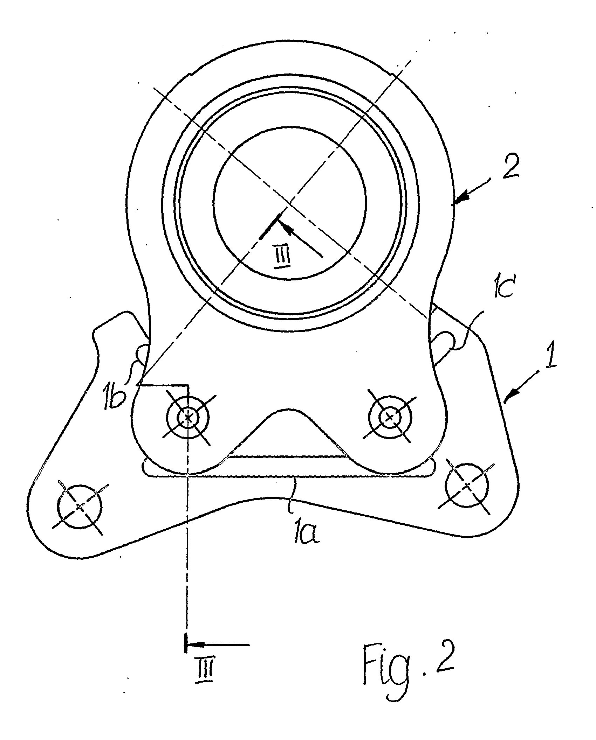

- Figur 2 -: eine senkrechte Ansicht der in Figur 1 dargstellten, miteinander verschweißten Bauteile,
- Figur 3 -: einen Schnitt entlang Schnittebene III-III in Figur 2.

### BESTER WEG ZUR AUSFÜHRUNG DER ERFINDUNG

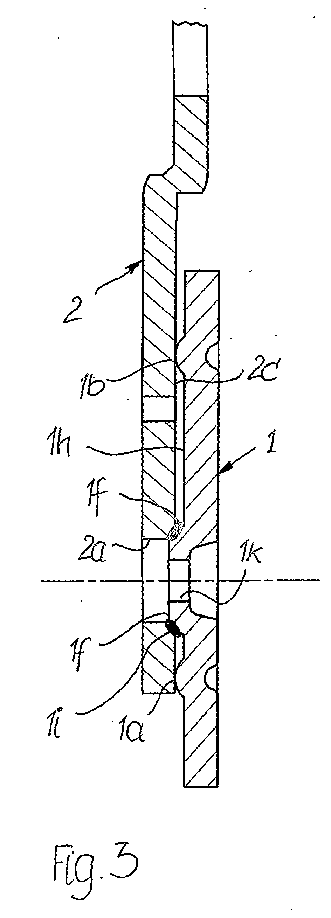

Im dargestellten Ausführungsbeispiel sind ein erstes Bauteil 1 und ein zweites Bauteil 2 miteinander verschweißt. Das erste Bauteil 1 ist im dargestellten Ausführungsbeispiel ein Adapter, der mit dem zweiten Bauteil 2, nämlich einem Beschlagunterteil eines Neigungsverstellbeschlags für eine Kraftfahrzeugrückenlehne verschweißt ist. Das erste Bauteil 1 besitzt zwei umlaufende Ausprägungen 1f und 1g. Diese umlaufenden Ausprägungen 1f und 1g stehen über die Oberfläche 1h des ersten Bauteils 1 vor. Diese umlaufenden Ausprägungen haben ein zentrales Durchgangsloch 1k, das aus Figur 3 bei der umlaufenden Ausprägung 1f ersichtlich ist. Am ersten Bauteil 1 sind seitlich sowohl zur umlaufenden Ausprägung 1f als auch zur umlaufenden Ausprägung 1g beabstandete zusätzliche Ausprägungen 1a, 1b und 1c vorgesehen, welche die Form von Rippen haben. Die Höhe der zusätzlichen Ausprägungen 1a, 1b und 1c gegenüber der gemeinsamen Oberfläche 1h ist gleich. Die zusätzlichen Ausprägungen liegen sämtlich im verschweißten Zustand an der Oberfläche 2c des zweiten Bauteils 2 an. Die Ausprägungen 1f und 1g greifen in komplementäre Ausnehmungen 2a und 2b des zweiten Bauteils 2 ein, die als Durchgangsöffnungen ausgebildet sind. Beim Widerstandsschweißen schmilzt Material im Kontaktbereich zwischen den umlaufenden Ausprägungen und den zugehörigen Ausnehmungen. Dieses geschmolzene Schweißmaterial 1i gelangt in den Freiraum, der als Spalt zwischen den Oberflächen 1h und 2c gebildet ist.

Das als Adapter ausgebildete erste Bauteil 1 besitzt eine bogenförmige Ausnehmung 1e und einen sich anschließenden Klammerbereich 1d. Der Klammerbereich 1d übergreift den benachbarten Bereich des Bauteils 2 sowie ein hier nicht dargestelltes Beschlagoberteil.

## Patentansprüche

1. Miteinander verschweißbare Bauteile für Stellvorrichtungen von Kraftfahrzeugsitzen, wobei das eine Bauteil (1) mindestens eine über seine Oberfläche (1h) zur Verbindungsseite vorstehende, umlaufende Ausprägung (1f; 1g) aufweist, die in eine komplementäre Ausnehmung (2a; 2b) des anderen Bauteils (2) eingreift und während eines Widerstands-Schweißvorgangs in die Ausnehmung eindrückbar ist,
**dadurch gekennzeichnet,**
**daß** mindestens eines der Bauteile (1) von der umlaufenden Ausprägung (1f; 1g) seitlich beabstandete zusätzliche Ausprägungen (1a; 1b, 1c) aufweist, die die Eindrücktiefe der umlaufenden Ausprägung (1f; 1g) des einen Bauteils (1) in die Ausnehmung (2a; 2b) des anderen Bauteils (2) derart begrenzen, daß die einander zugewandten Oberflächen (1h; 2c) der beiden Bauteile (1; 2) einen Abstand voneinander halten.

2. Bauteile nach Anspruch 1,
**dadurch gekennzeichnet,**
**daß** die zusätzlichen Ausprägungen (1a; 1b; 1c) jeweils um die gleiche Höhe über die Oberfläche (1h) des zugehörigen Bauteils (1) vorstehen.

3. Bauteile nach Anspruch 1 oder 2,
**dadurch gekennzeichnet,**
**daß** die umlaufende Ausprägung (1f; 1g) eine runde Umfangskontur aufweist und in eine runde Ausnehmung (2a; 2b) des anderen Bauteils (2) eingreift.

4. Bauteile nach mindestens einem der Ansprüche 1 bis 3,
**dadurch gekennzeichnet,**
**daß** die runde Umfangskontur zumindest annähernd der Umfangskontur eines Kegelstumpfes entspricht.

5. Bauteile nach mindestens einem der Ansprüche 1 bis 4,
**dadurch gekennzeichnet,**
**daß** die zusätzlichen Ausprägungen (1a; 1b; 1c) längliche Rippen sind.

6. Bauteile nach mindestens einem der Ansprüche 1 bis 5,
**dadurch gekennzeichnet,**
**daß** sämtliche Ausprägungen (1a; 1b; 1c; 1f; 1g) am gleichen Bauteil (1) vorgesehen sind.

## Claims

1. Parts for adjusting devices of motor vehicle seats which can be welded to one another, whereby one part (1) comprises at least one circular shaped area (1f; 1g) protruding over its surface (1h) towards the connection side which engages in a complementary recess (2a; 2b) of the other part (2) and can be pressed into the recess in a resistance welding process,
**characterised in that**
at least one of the parts (1) comprises additional shaped areas (1a; 1b; 1c) laterally spaced apart from the circular shaped area (1f; 1g) which limit the pressing-in depth of the circular shaped area (1f; 1g) of one part (1) into the recess (2a; 2b) of the other part (2) in such a way that the surfaces (1h; 2c) of the two parts (1, 2) facing each other remain spaced apart.

2. Parts according to claim 1,
**characterised in that**
the additional shaped areas (1a; 1b; 1c) each protrude by the same height over the surface (1h) of the associated part (1).

3. Parts according to claim 1 or 2,
**characterised in that**
the circular shaped area (1f; 1g) has a round peripheral contour and engages in a round recess (2a; 2b) of the other part (2).

4. Parts according to at least one of the claims 1 to 3,
**characterised in that**
the round peripheral contour corresponds at least approximately to the peripheral contour of a truncated cone.

5. Parts according to at least one of the claims 1 to 4,
**characterised in that**
the additional shaped areas (1a; 1b; 1c) are elongated ribs.

6. Parts according to one of the claims 1 to 5,
**characterised in that**
all shaped areas (1a; 1b; 1c; 1f; 1g) are provided on the same component (1).

## Revendications

1. Composants pouvant être soudés les uns aux autres pour dispositifs de réglage de sièges de véhicules automobiles, l'un des composants (1) présentant au moins un relief d'entourage (1f; 1g), qui, faisant saillie au-dessus de sa surface (1h), vers le côté d'assemblage, s'engage dans un évidement complémentaire (2a; 2b) de l'autre composant (2), et peut être enfoncé dans ledit évidement au cours d'un processus de soudage par résistance,
**caractérisé en ce que**
l'un des composants (1) au moins présente des reliefs supplémentaires (1a; 1b; 1c), latéralement distancés du relief d'entourage (1f; 1g), qui limitent la profondeur de pénétration du relief d'entourage (1f; 1g) de l'un des composants (1) dans l'évidement (2a; 2b) de l'autre composant (2) de sorte que les surfaces (1h; 2c) des deux composants (1; 2), orientées l'une vers l'autre, conservent un intervalle entre elles.

2. Composants selon la revendication 1,
**caractérisés en ce que**
les reliefs supplémentaires (1a; 1b; 1c) font chacun saillie de la même hauteur au-dessus de la surfaces (1h) du composant afférent (1).

3. Composants selon revendication 1 ou 2,
**caractérisés en ce que**
le relief d'entourage (1f; 1g) présente un contour de pourtour rond et s'engage dans un évidement (2a; 2b) rond de l'autre composant (2).

4. Composants selon l'une des revendications 1 à 3,
**caractérisés en ce que**
le contour du pourtour rond correspond, au moins approximativement, au pourtour d'un cône tronqué.

5. Composants selon l'une des revendications 1 à 4,
**caractérisés en ce que**
les reliefs supplémentaires (1a; 1b; 1c) sont des nervures longitudinales.

6. Composants selon l'une des revendications 1 à 5,
**caractérisés en ce que**
tous les reliefs (1a; 1b; 1c; 1f; 1g) sont prévus sur le même composant (1).
